# EUROPEAN PATENT SPECIFICATION

(11) **EP 3 963 379 B1**
(45) Date of publication and mention of the grant of the patent: **03.06.2026**
(21) Application number: 20798064.0
(22) Date of filing: 30.04.2020
(51) Int. Cl.: G02B 6/44

(54) **OPTICAL FIBER TRAY ORGANIZER AND ASSEMBLY**
ORGANISATOR FÜR GLASFASERSPLEISSKASSETTE UND ANORDNUNG
ORGANISEUR DE PLATEAU DE FIBRES OPTIQUES ET ENSEMBLE

(30) Priority: 30.04.2019 US 201962840825 P
(43) Date of publication of application: 09.03.2022
(73) Proprietor: CommScope Technologies LLC, Hickory, NC 28602 (US)
(72) Inventor: CLAESSENS, Bart Mattie, Hickory, North Carolina 28602 (US); BECKERS, Erwin, Hickory, North Carolina 28602 (US)
(74) Representative: Murgitroyd & Company
(86) International application number: PCT/US2020/030696
(87) International publication number: WO 2020/223473

(56) References cited:
- EP-A1- 2 533 086
- WO-A1-2014/009255
- WO-A1-98/22842
- WO-A2-2013/007662
- WO-A2-94/12904
- US-A1- 2006 029 351
- US-A1- 2006 029 351
- US-A1- 2018 039 037
- US-B1- 6 304 707
- US-B1- 6 504 987
- US-B2- 8 625 951

## Description

### Cross-Reference to Related Application

This application is being filed on April 30, 2020 as a PCT International Patent Application and claims the benefit of U.S. Patent Application Serial No. 62/840,825, filed on April 30, 2019.

### Technical Field

The present disclosure relates to the management of optical fiber connections, and in particular, to an organizer assembly that holds fiber optic trays.

### Background

Fiber optic cables are often managed inside a telecommunications closure using a fiber management assembly. The management assembly typically includes a plurality of pivotally mounted trays mounted on one or more groove plates. In addition to providing a structural support for the trays, the groove plates can include features that facilitate routing of cables and fibers onto and off of the trays. The trays can include various cable and fiber guides, guide walls, and retaining tabs for guiding incoming and outgoing cables and fibers to and from the telecommunications closure.

Typical groove plate management assemblies for managing trays within a closure include a bulky and heavy metal internal support frame that supports the groove plates. In addition, the internal support frame is a fixed size, limiting the internal support frame's ability to accommodate larger or smaller numbers groove plates, and thereby limiting the number of different sizes of closure that the internal support frame can be used with. WO-A1-98/22842, WO-A2-94/12904, EP-A1-2533086, US-A1-2006/029351, WO-A2-2013/007662 and WO-A1-2014/009255 disclose related art.

### Summary

The present disclosure relates to a modular groove plate organizing assembly according to claim 1.

The organizer includes modular groove plates that are stackable one atop another to customize and modify the size of the organizer. Stacks of the modular groove plates stay together without securing all of the groove plates to a separate support frame. The organizer includes a pair of vertical stacks of groove plates that provide reciprocal structural support to each other with one or removable brackets, the brackets spanning a cable management volume between the stacks of groove plates. The number of brackets used depends on the number of groove plates in the stacks, allowing the size of the stacks to be easily customized and modified. Thus, a total length of the organizer in one dimension is easily adjustable without impacting the groove plate stacks' ability to stay together.

In some examples, the groove plate organizer is adapted to be positioned and mounted within telecommunications equipment, such as a closure. The closure can be a sealed/resealable closure or a non-sealable closure (e.g., a cabinet, drawer, rack, etc.). One or more fiber optic cables carrying one or more optical fibers are routed to the equipment, and one or more of the optical fibers are managed on the organizer. The cables can be routed through cable ports defined by the closure housing and then the fibers can be routed to trays mounted on the groove plates via channels defined by the groove plates. Once on the trays, the fibers can be spooled, split, spliced, indexed or otherwise managed as needed to provide desired network connectivity (e.g., between a provider and subscribers) via the closure. Lengths of fibers can also be stored on or in the organizer, e.g., in coils around spool structures.

Due to the modularity of the groove plates, the organizer can be adapted to different sized closures. For example, if a given closure requires additional connectivity or fiber management capacity than it currently handles, additional groove plates are added to the existing organizer and a larger closure housing provided to accommodate the larger organizer. Similarly, if a given closure requires less connectivity capacity or fiber management capacity than it currently handles, groove plates can be removed from the existing organizer and a smaller closure housing provided to accommodate the smaller organizer, providing for a closure that takes up less space.

The invention is defined in independent claim 1. Optional embodiments are set out in any dependent claims.

Outside the scope of the present invention, a kit for assembling an optical fiber organizer for an optical fiber closure comprises: one or more optical fiber management trays; at least four groove plates defining grooves for pivotally mounting the one or more optical fiber management trays to the groove plates, at least first and second of the at least four groove plates being stackable in a first stack along a first stacking axis, at least third and fourth of the at least four groove plates being stackable in a second stack along a second stacking axis parallel to the first stacking axis; the kit further comprising either or both of: i) at least one bracket that is attachable to and detachable from the stacks of groove plates, the at least one bracket being attachable to the stacks such that the at least one bracket spans a spacing between the stacks perpendicular to the first and second stacking axes; or ii) at least one reinforcement rod being insertable in a rod receiving passage of one of the stacks of groove plates along an insertion axis that is parallel to the first and second stacking axes.

Outside the scope of the present invention a kit for assembling an optical fiber organizer for an optical fiber closure comprises: one or more optical fiber management trays; first and second fiber routing members; at least four groove plates defining grooves for pivotally mounting the one or more optical fiber management trays to the groove plates, at least first and second of the at least four groove plates being stackable in a first stack with the first fiber routing member along a first stacking axis, at least third and fourth of the at least four groove plates being stackable in a second stack with the second fiber routing member along a second stacking axis parallel to the first stacking axis; the kit further comprising: i) at least a pair of brackets that are attachable to and detachable from the stacks of groove plates, the brackets being attachable to the stacks such that the brackets span a spacing between the stacks perpendicular to the first and second stacking axes; ii) at least one reinforcement rod being insertable in a rod receiving passage of one of the stacks of groove plates along an insertion axis that is parallel to the first and second stacking axes; and iii) at least a pair of fiber crossover members that are attachable to and detachable from the fiber routing members, the fiber crossover members being attachable to the fiber routing members such that the fiber crossover members span the spacing between the stacks.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts as defined by the claims.

### Brief Description of the Drawings

The following drawings are illustrative of particular embodiments of the present disclosure and therefore do not limit the scope of the present disclosure. The drawings are not to scale and are intended for use in conjunction with the explanations in the following detailed description. Embodiments of the present disclosure will hereinafter be described in conjunction with the appended drawings, wherein like numerals denote like elements.
FIG. 1 is a perspective view of a prior art optical fiber closure in a sealed configuration.
FIG. 2 is a perspective view of the prior art optical fiber closure of FIG. 1 in an open configuration.
FIG. 3 is a perspective view of a prior art organizer that can be housed in the closure of FIG. 1.
FIG. 4 is a further perspective view of the prior art organizer of FIG. 3.
FIG. 5 is a further perspective view of the prior art organizer of FIG. 3.
FIG. 6 is a side view of the prior art organizer of FIG. 3.
FIG. 7 is a further side view of the prior art organizer of FIG. 3.
FIG. 8 is a perspective and partially schematic view of an example fiber optic closure in an open configuration including a modular groove plate organizer in accordance with the present disclosure.
FIG. 9 is a front view of the modular groove plate organizer of FIG. 8.
FIG. 10 is a rear view of the modular groove plate organizer of FIG. 8.
FIG. 11 is a top perspective view of the modular groove plate organizer of FIG. 8.
FIG. 12 is a side view of the modular groove plate organizer of FIG. 8.
FIG. 13 is a further perspective view of the modular groove plate organizer of FIG. 8.
FIG. 14 is a partially exploded, perspective view of the modular groove plate organizer of FIG. 8.
FIG. 15 is a further, partially exploded, perspective view of the modular groove plate organizer of FIG. 8.
FIG. 16 is a view of the reinforcement rods of the modular groove plate organizer of FIG. 8.
FIG. 17 is a front perspective view one of the groove plates of the modular groove plate organizer of FIG. 8.
FIG. 18 is a front view of the groove plate of FIG. 17.
FIG. 19 is a rear perspective view of the groove plate of FIG. 17.
FIG. 20 is a rear view of the groove plate of FIG. 17.
FIG. 21 is a further partially exploded, perspective view of a portion of the modular groove plate organizer of FIG. 8.
FIG. 22 is a perspective view of the fiber crossover member of FIG. 21.
FIG. 23 is a further perspective view of the fiber crossover member of FIG. 22.

### Detailed Description

Various embodiments of the present invention will be described in detail with reference to the drawings, wherein like reference numerals represent like parts and assemblies throughout the several views. Reference to various embodiments does not limit the scope of the invention, which is limited only by the scope of the claims attached hereto. Any examples set forth in this specification are not intended to be limiting and merely set forth some of the many possible embodiments for the claimed invention.

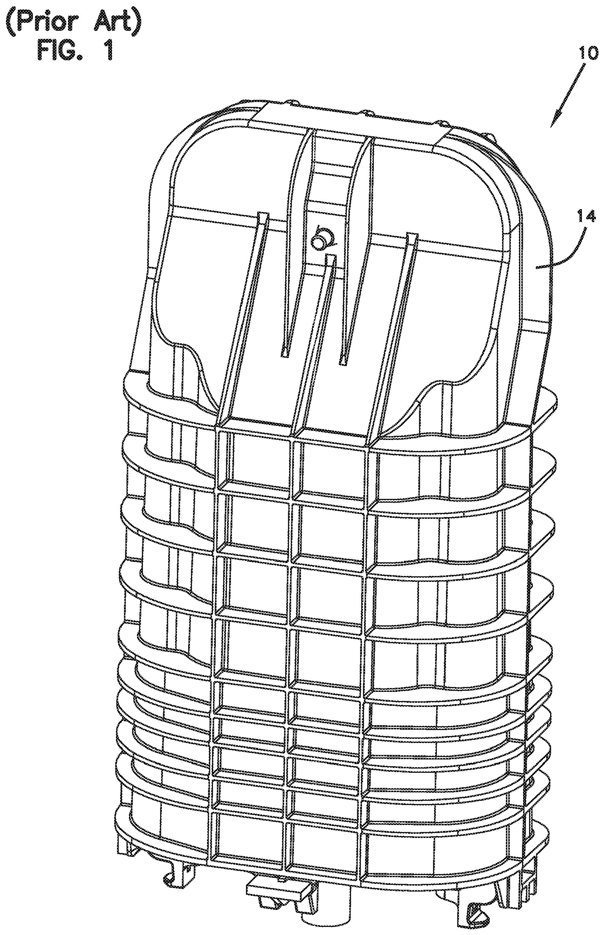

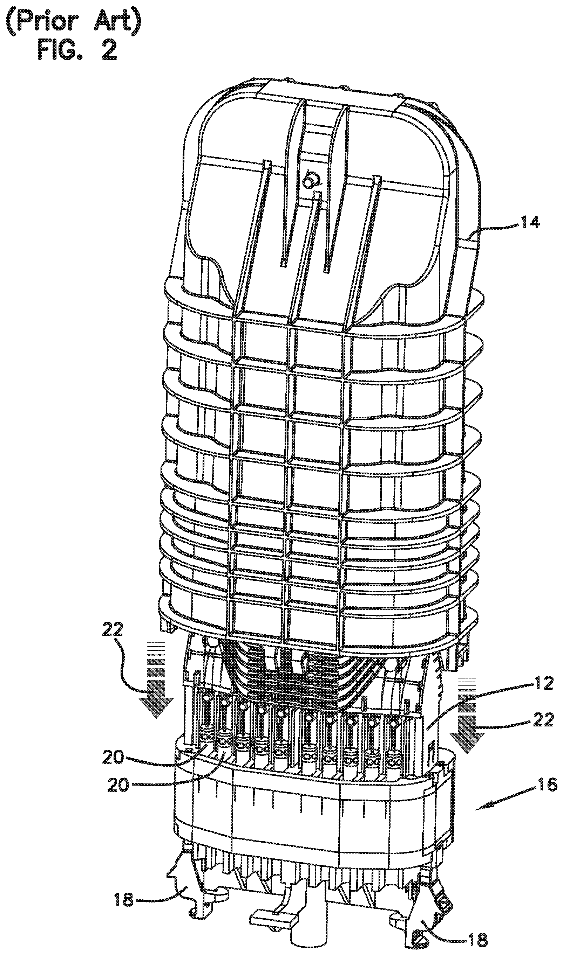

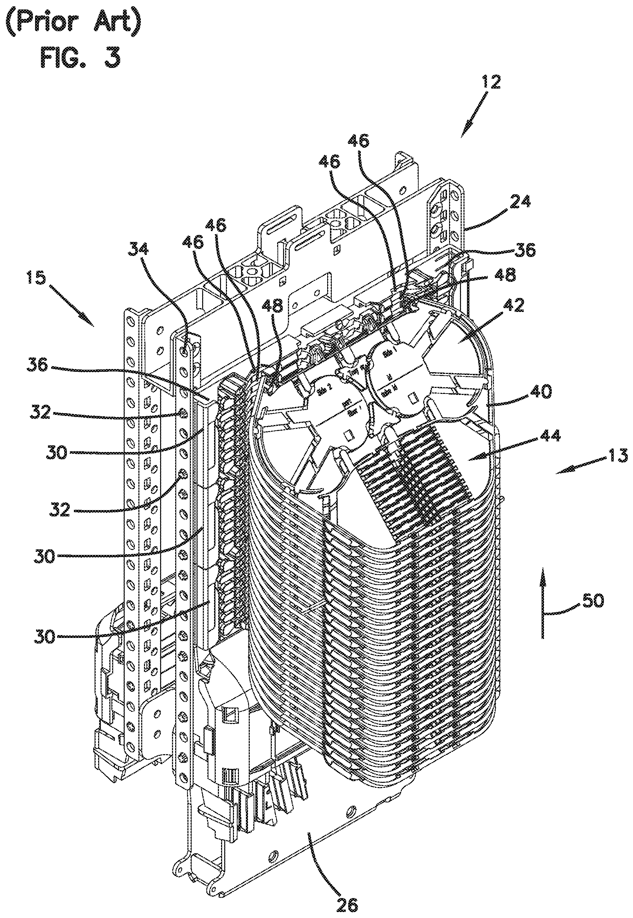

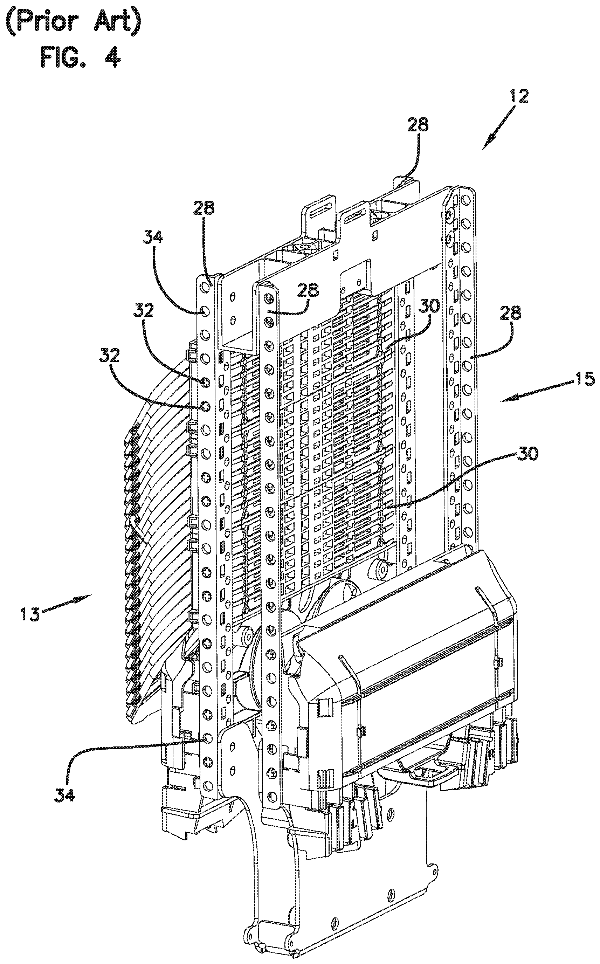

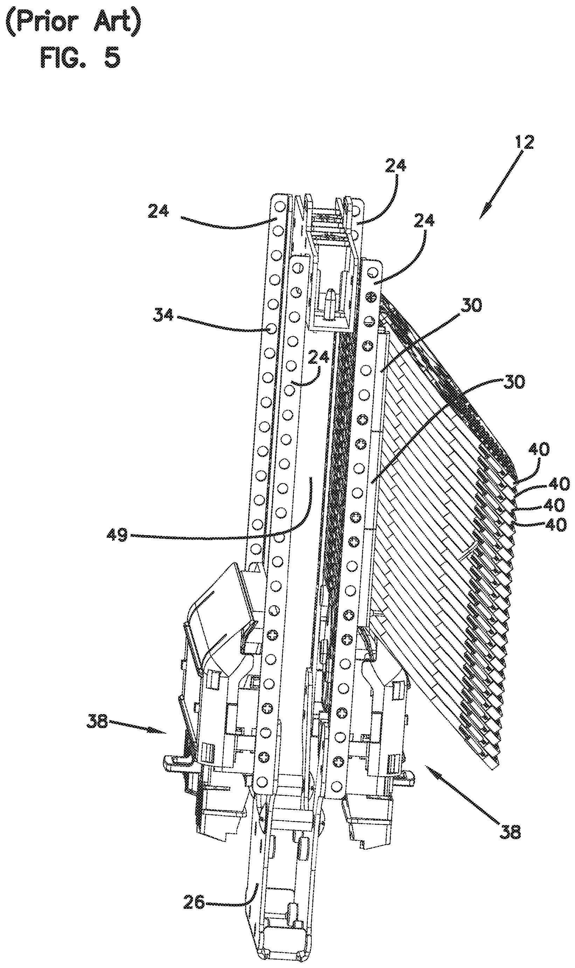

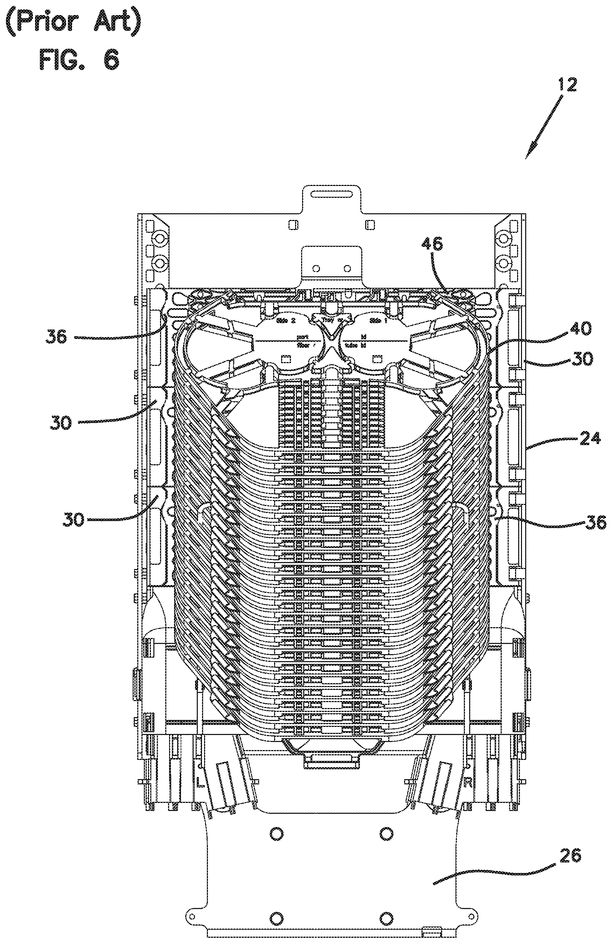

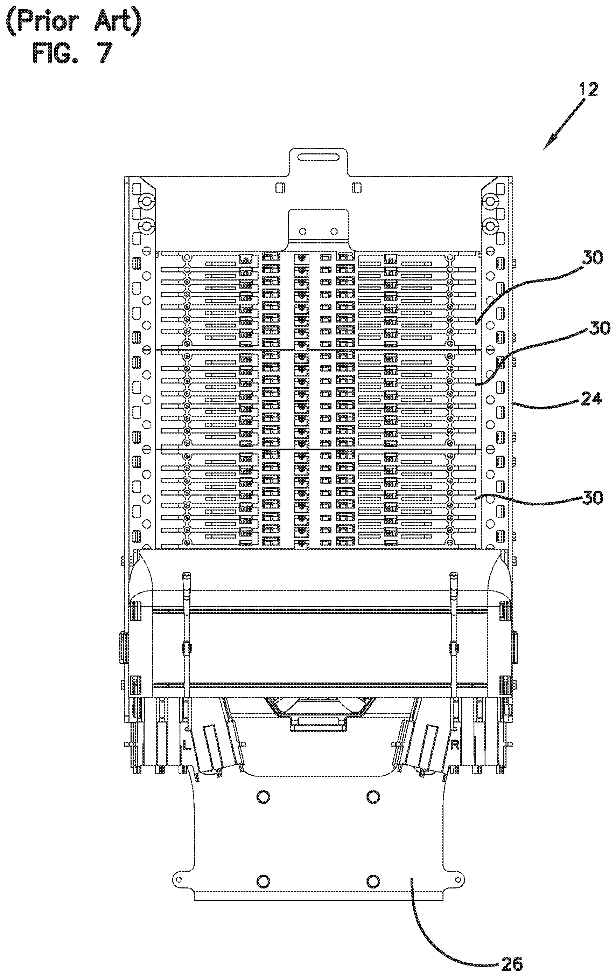

Referring to FIGS. 1-7 an example prior art optical fiber closure 10 and optical fiber organizer 12 will be described. The closure 10 includes housing pieces 14 and 16 that are latchable together via latch levers 18 to form a sealed closure volume. When the closure 10 is sealed, the organizer 12 is positioned within the closure volume. For ease of description, the organizer 12 has a front 13 and a back 15. Fiber optic cables 20 carrying optical fibers enter the closure volume via cable ports in the base 16. Within the closure, optical fibers from the cables 20 are managed with the organizer 12. As shown in FIG. 2, the organizer 12 is fixedly mounted to the housing piece 16 of the closure 10. Thus, when separating the housing pieces 14 and 16 (as indicated by the arrows 22) to access the organizer 12 or the closure volume, the organizer 12 and the housing piece 16 move together as a unit.

The organizer 12 includes a rigid support frame 24, typically made of metal. A base portion 26 of the support frame 24 is fixed to the housing piece 16. Fixed to the base portion 26 are four supports 28 arranged as a front pair of supports and a rear pair of supports. Groove plates 30 can be fixed to each pair of supports (in the example shown, groove plates are fixed only to the front pair of supports 28). Each groove plates 30 plate includes pegs 32 that are inserted into holes 34 in the corresponding supports 28, thereby connecting the groove plates to the rigid support frame 24. Optionally, auxiliary cable organizing structures 38 can be coupled to the support frame 24 in a similar manner as the groove plates 30.

The groove plates 30 define opposing side guide channels 36 through which optical fibers from the cables 20 can be guided to a desired fiber management tray 40. Each of the groove plates 30 include a plurality of grooves or sockets that pivotally receive and mount hinge pins of a plurality of fiber management trays 40. In this example, there are three groove plates 30 attached to the front pair of supports 28 of the support frame 24, each of the three groove plates pivotally mounting eight trays 40 for a total of twenty-four trays 40. The trays can be pivoted to provide access to other trays. The trays 40 include fiber management features including a spooling and routing adjustment region 42 and a splice region 44. Optical fibers fed through the guide channels 36 (generally in the direction of the arrow 50) to the groove 46 of the groove plate 30 to which the desired fiber management tray 40 is mounted. The fibers are then fed from the guide channel 36 through the identified groove 46 and onto the desired tray 40 via fiber entries 48 defined by the tray 40. Once on the tray 40, the fibers can be managed in one or both of the regions 42, 44.

Due to the fixed size of the frame 24, the frame 24 cannot support more than three of the groove plates 30 on either side, e.g., no more than six of the groove plates 30, which in turn limits the number of trays 40 that can be supported and the amount of optical fiber management that can be performed using the organizer 12. Likewise, the organizer 12 is not readily modified to cooperate with a smaller closure than the closure 10. In addition, the frame 24 occupies space within the closure volume, limiting the amount of cable management space 49 between front and rear groove plates 30.

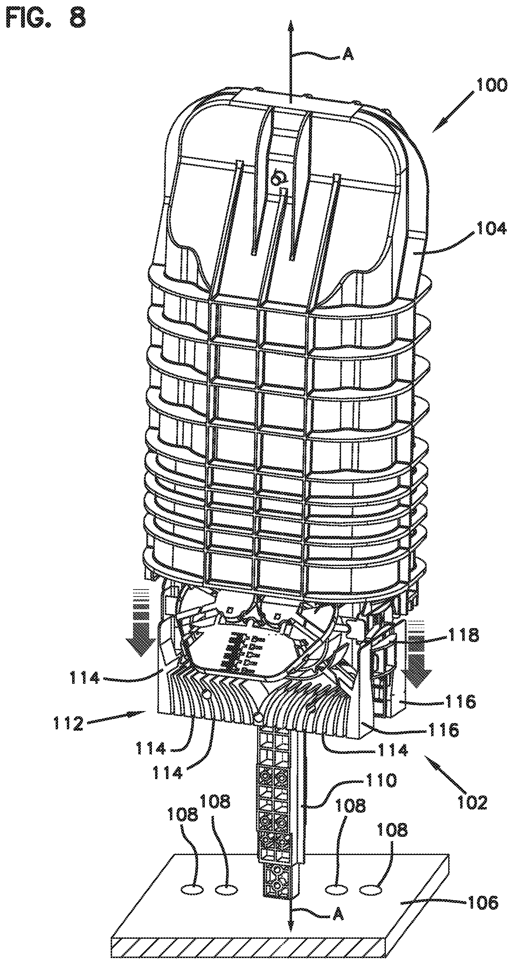

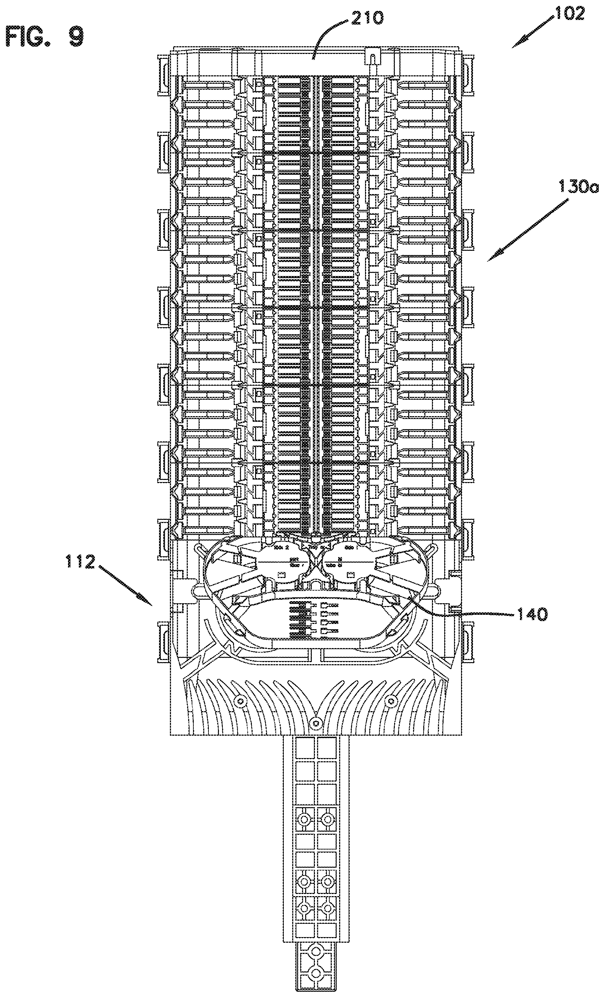

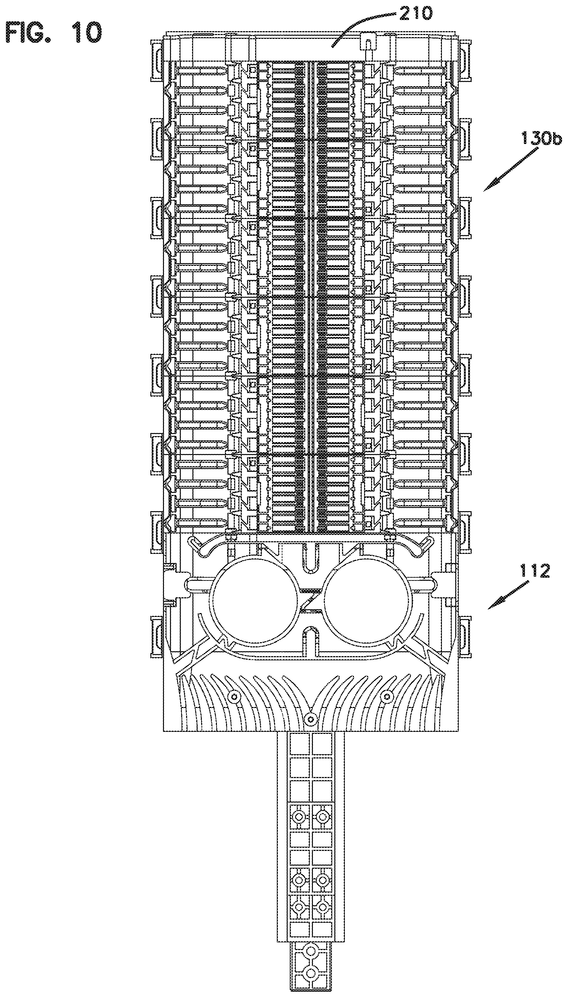

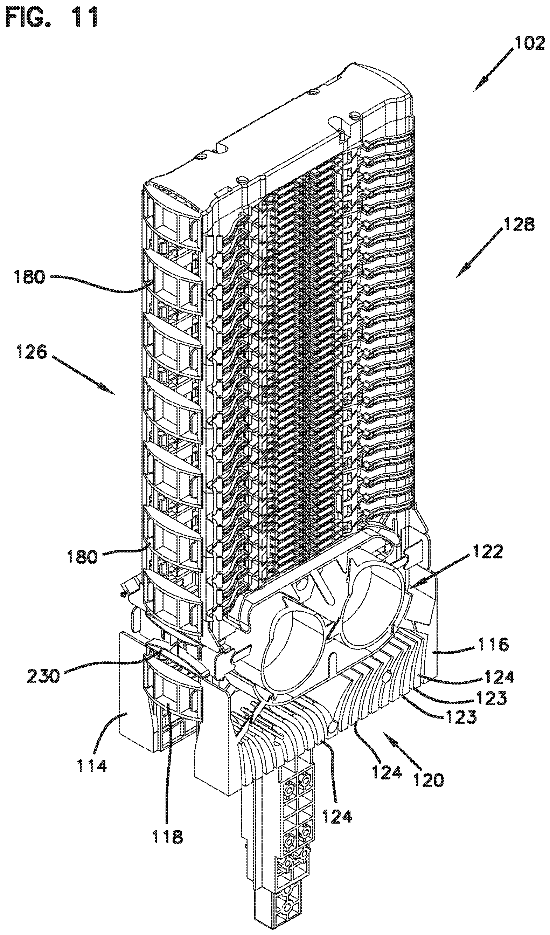

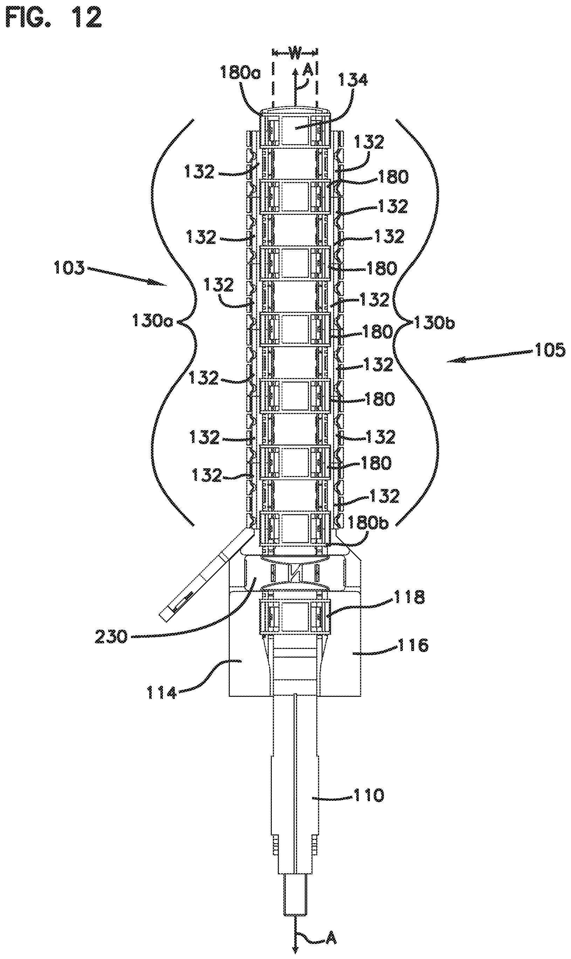

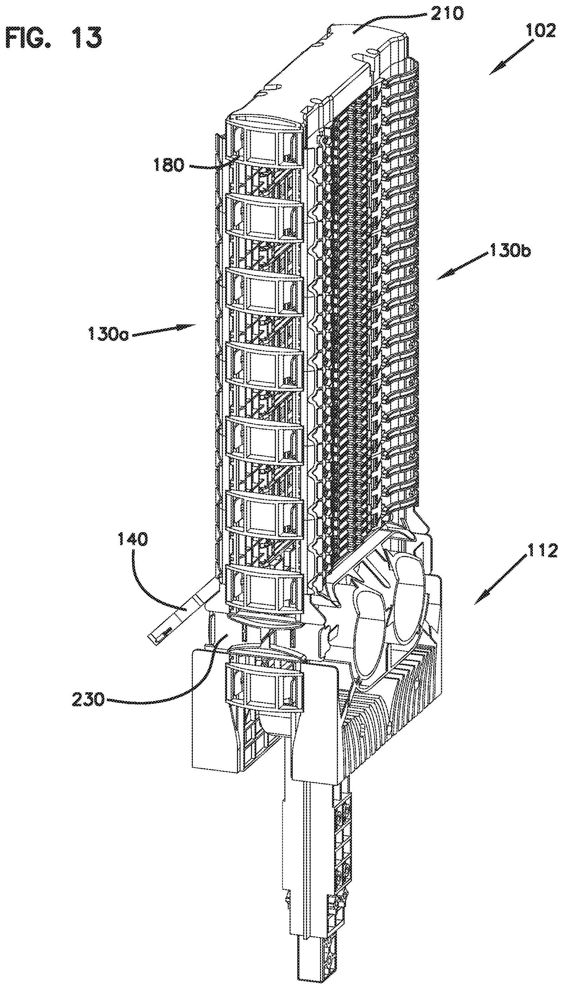

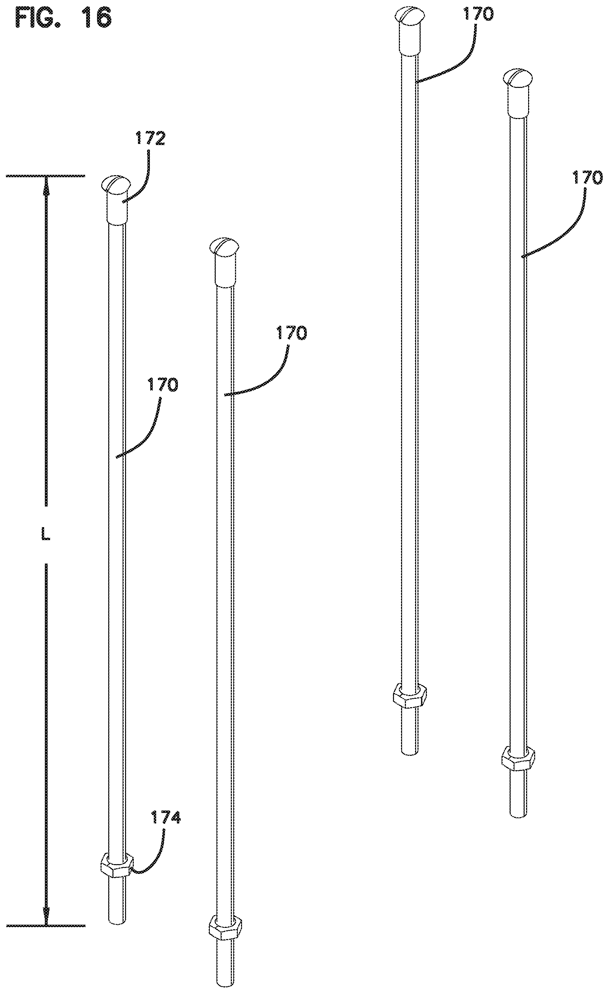

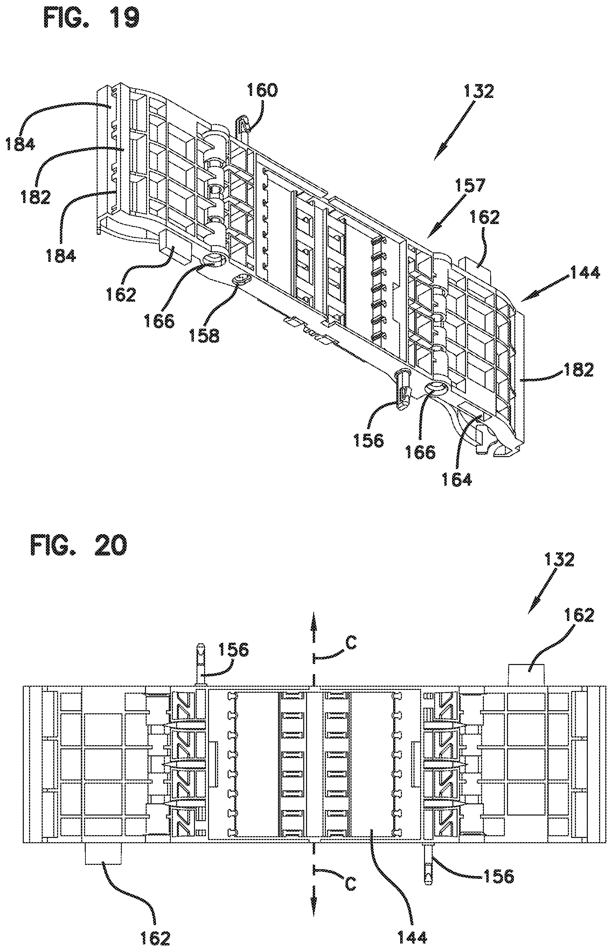

Referring now to FIGS. 8-23, an optical fiber organizing assembly 102 is shown that can provide one or more advantages over the organizer 12 described above. The organizer 102 can be mounted to a closure 100 having housing pieces 104 and 106, the housing piece 106 being depicted schematically. The closure 100 is defined by an axis A. The housing piece 104 is a cover and the housing piece 106 is a base. The base 106 and cover 104 are sealingly mateable to form an enclosure volume with the organizer 102 positioned therein. For ease of description, the organizer 102 has a front 103 and a back 105. In some examples a support trunk 110 of the organizer 102 is fixedly mounted to the base 106.

Due to the modularity of the organizer 102, it should be appreciated that different sized housing pieces and closures can be substituted to accommodate different sized organizers. For example, a larger or smaller cover can be substituted for the cover 104, the substitute cover being axially longer or shorter than the cover 104 but still sealingly mateable with the base 106.

Fiber optic cables can enter the closure volume via sealed or sealable cable ports 108 defined by the base 106. Within the closure volume, optical fibers from the cables can be routed to the organizer 102. The organizer includes a routing portion 112. The routing portion 112 is secured to the trunk 110. The routing portion 112 includes a first routing portion member 114 and a second routing portion member 116 of identical construction and facing opposite directions. Couplers 118 couple the routing portion members 114 and 116 together for additional support. In some examples, the couplers 118 are of identical construction as the couplers 180 that are described below.

Many different configurations for the routing portion 112 are possible and within the scope of this disclosure. In the depicted embodiment, each of the members 114 and 116 of the routing portion 112 includes a channel portion 120 and a spooling portion 122. The channel portion 120 includes a plurality of channels 123 defined by bend radius limiting walls 124. The channels direct some fibers (e.g., ribbon fibers, tubes holding loose fibers) towards one side 126 of the organizer 102, and other fibers towards the opposing side 128 of the organizer 102 while protecting the fibers from potentially damaging over-bending. The spooling portion 122 includes spool structures that are configured to take up fiber slack and also to redirect fibers. For example, fibers directed to one side of the organizer 102 by the channels 123 can be redirected to the opposing side of the organizer 102 using the guiding walls and spool structures of the spooling portion 122.

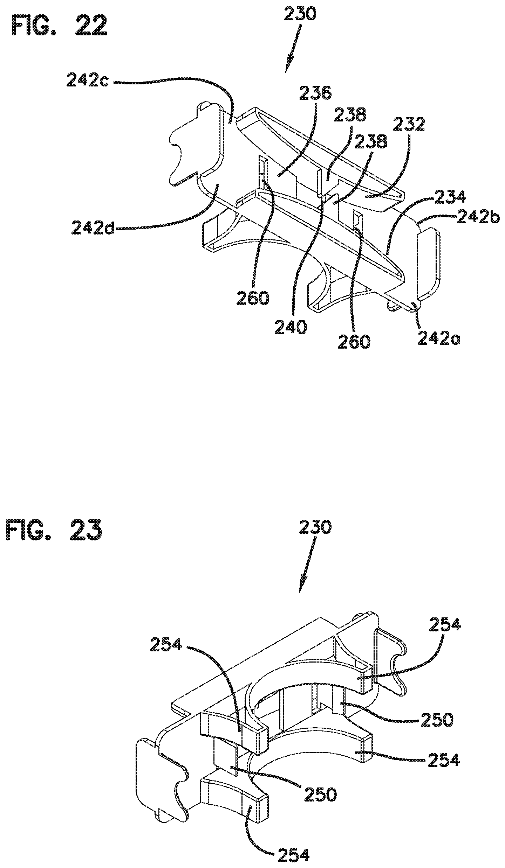

A fiber crossover member 230 is also provided on each of the opposite sides 126 and 128 of the organizer 102. Each fiber crossover member 230 is coupled to both routing portion members 114 and 116. The coupling of the crossover members 230 to the routing portion members114 and 116 can provide additional structural support to the organizer 102. Each crossover member 230 includes a pair of opposing curved walls 232, 234 (FIGS. 22-23) on opposite sides of a guide channel 236. Fibers can enter and exit the channel 236 from/to the front routing portion member 114 and the back routing portion member 116 via any of the entryways 242a, 242b, 242c, and 242d. The curvature of the walls 232, 234 can protect the fibers against over bending as they pass through the channel 236. For a given fiber, the wall or walls 232, 234 utilized for this purpose can depend on which of the entryways 242a, 242b, 242c, 242d the fiber enters and exits the guide channel 236.

Fiber retention tabs 238 partially cover the guide channel 236. A slot 240 is positioned between the pair of tabs 238. The slot 240 is elongated at an angle that is oblique to the front to back direction of the organizer 102, to improve retention of optical fibers by the tabs 238. The crossover members 230 provide a convenient routing path for one or more optical fibers from one of the routing portion members 114, 116 to the other of the routing portion members 114, 116. Thus, for example, a fiber initially routed via a cable or protective sheath to the front routing portion member 114 can be routed from the front routing portion member 114 to the back modular stack 130b (described below) via one of the crossover members 230 and the back routing portion member 116. Similarly, a fiber initially routed via a cable or protective sheath to the back routing portion member 116 can be routed from the back routing portion member 116 to the front modular stack 130a (described below) via one of the crossover members 230 and the front routing portion member 114. Thus, the crossover members 230 provide for enhanced versatility in routing fibers between different parts of the organizer 102.

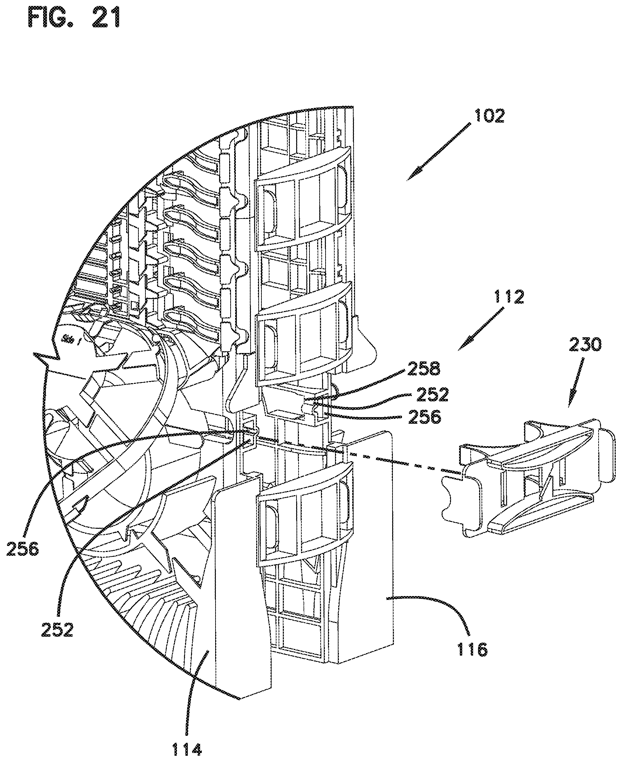

The crossover member 230 includes support legs 254 complementary to structures defined by the front and back routing portion members 114 and 116. In addition, the crossover member includes flexibly resilient latch arms 250 for releasably snappingly coupling the crossover member 230 to latch retainers 252 defined by the front and back routing portion members 114 and 116. In the example depicted (FIG. 21), the latch arms 250 can be inserted through openings 256 defined by the front and back routing portion members until the latch arms 250 flex and snap over the ends 258 of the latch retainers 252. The crossover member 230 can define a slot 260 adjacent each latch arm 250. To uncouple the crossover member from the routing portion 112, a tool can be inserted into the slots 260 to deflect the corresponding latch arms 250 until the latch arms 250 disengage the latch retainers 252. Once the latch arms are disengaged, the crossover remember 230 can be separated from the front and back routing portion members 114 and 116.

Extending from the routing portion members 114 and 116 and parallel to the axis A are two modular stacks 130a and 130b (collectively or generically, 130) of groove plates 132 facing away from each other, i.e., the tray mounting grooves of the groove plates 132 in the stack 130a face the opposite direction as the tray mounting grooves of the groove plates 132 of the stack 130b. In the depicted configuration, each of the stacks 130a and 130b includes six groove plates stacked one atop another parallel to the axis A. In some examples, as in the depicted example, the number of groove plates in the two stacks are equal. In other examples, one of the two stacks has more groove plates than the other of the two stacks.

Between the two stacks 130a and 130b is a storage and organizing volume 134 that extends along the axis A as much as or more than the lengths of the stacks 130a and 130b extending along their respective stacking axes (parallel to the axis A). The storage and organizing volume 134 has a width w extending between the stacks 130a and 130b perpendicularly to the axis A. The storage and organizing volume 134 can be used for storing portions of cables, fibers, and/or tubes/sheaths that receive and protect fibers.

Each groove plate 132 includes fiber guide channels 136 on opposite sides. The fiber guide channels 136 run generally parallel to the axis A, and the guide channels 136 of the groove plates 132 in a stack 130 are aligned. Each groove plate 132 defines a plurality of grooves 138 positioned one atop another along a stacking axis parallel to the axis A. In this example, each of the groove plates 132 includes eight grooves 138. Walls 142 can help guide fibers from the guide channels 136 onto the desired tray 140 that is pivotally mounted to a groove 138. Each groove 138 includes clipping components 139 adapted to snappingly receive hinge pins of a fiber management tray 140, allowing the management tray 140 to pivot within the groove 138 while remaining retained by the groove plate 132.

In some examples, all of the groove plates 132 in the organizer 102 are of identical construction.

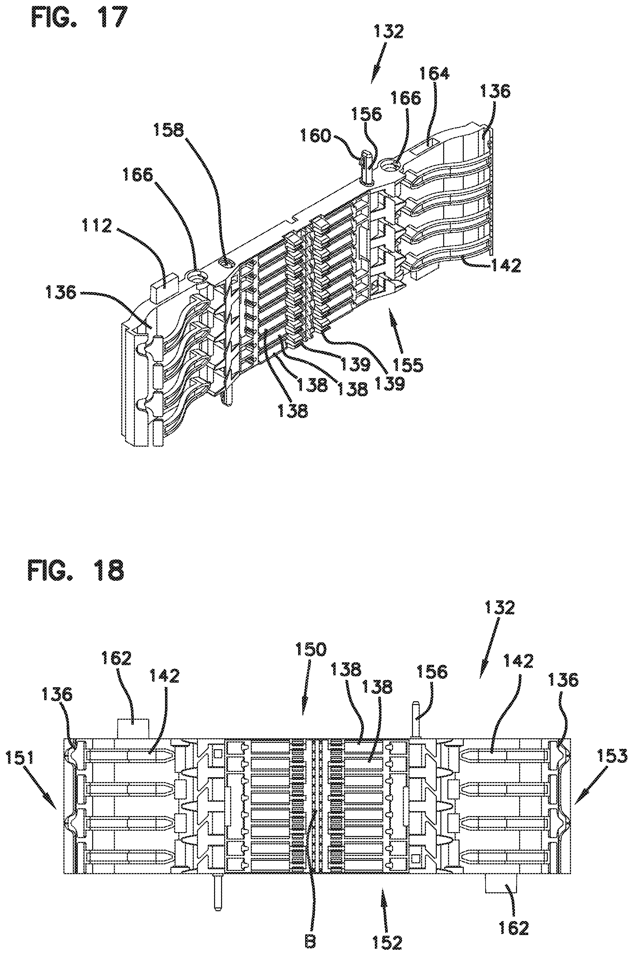

In some examples, the groove plates 132 are rotationally symmetrical about an axis B that is perpendicular to the axis A, and extending into and out of the page in FIG. 18. That is, each groove plate 132 can be equivalently used in the orientation depicted and also in an orientation that is rotated by 180° about the axis B (FIG. 18).

The organizer 102 does not include an internal support frame. For example, there is no support frame within the storage and organizing volume 134. Thus, for example, the sides 144 of the groove plates 132 that face the groove plates of the other stack 130 are not secured to any structure, such as a support frame.

Features of the organizer 102 and the groove plates 132 that stabilize the stacks 130 without requiring an internal support frame will now be described.

For ease of description only and without limiting the various described features to any particular orientation when used, each groove plate 132 has a top 150, a bottom 152, a first side 151, a second side 153, an outward face 155 and an inward face 157, the grooves 138 of the groove plate 132 facing outwards. Optionally, on each of the top 150 and bottom 152 of each groove plate 132, the groove plate 132 includes a post 156 and a post receiving hole 158. Optionally, the post 156 includes a spring-loaded latch 160 that removably locks into a post receiving hole 158 of an adjacent groove plate 132 above or below it in the stack. Thus, when the groove plates 132 are aligned in a stack 130, the posts 156 and post receiving holes 158 are aligned.

Further optionally, on each of the top 150 and bottom 152 of each groove plate 132, the groove plate 132 includes an alignment tab 162 and a tab slot 164 adapted to receive a tab 162 of an adjacent groove plate 132 in a stack 130. The tabs 162 and tab slots 164 can help to properly align the groove plates in the stack 130, and also provide additional stabilization to the stacks 130. Like the post 156 and post receiving hole 158 pairs, the tab 162 and slot 164 pairs are complementarily sized, shaped (e.g., with rectangular cross-sectional profiles) and positioned to cooperate between adjacently stacked groove plates. In the example embodiment shown, the tabs 162 and slots 164 are positioned closer to the sides 151, 153 nearest them, respectively, and farther from the axis C defined by the groove plate 132 than the posts 156 and receiving holes 158. In alternative examples, the tabs and slots can be positioned farther from the sides 151, 153 nearest them than and closer to the axis C than the posts 156 and receiving holes 158. In the embodiment shown, the posts 156 are positioned near slots 164 and the tabs 162 are positioned near post receiving holes 158. In alternative embodiments, the relative positioning of posts, post receiving holes, tabs, and tab slots can be adjusted.

Each of the groove plates 132 also includes a pair of open ended longitudinally extending rod receiving passages 166 extending along axes of the passages 166 (parallel to and on either side of the axis C) from and through the top 150 and bottom 152 of the groove plate 132. When groove plates 132 are stacked together in a stack 130, the passages 166 of adjacent groove plates align along the axes of the passages 166 and parallel to the axis A.

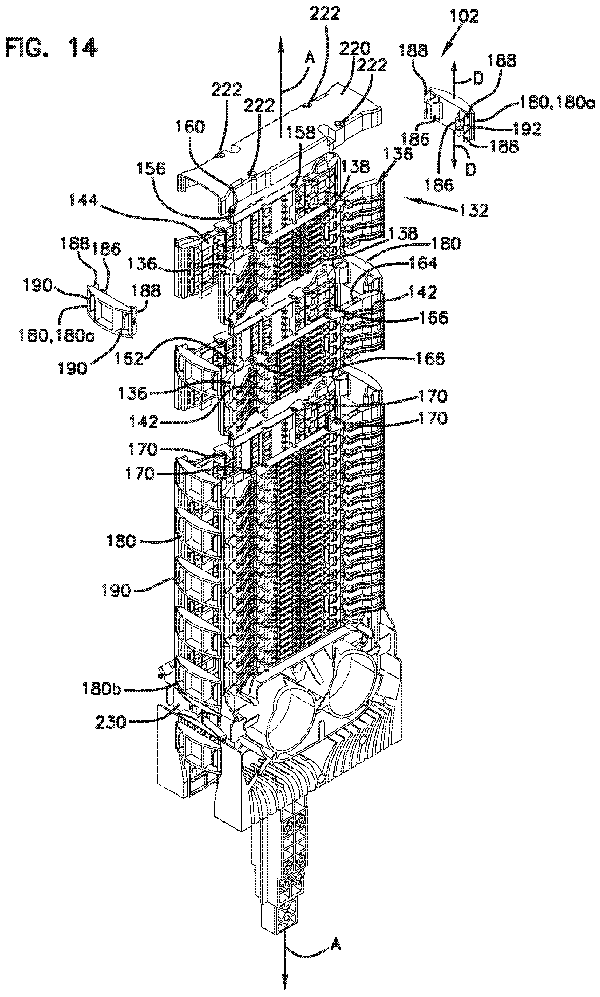

The passages 166 are sized to receive reinforcement rods 170. The reinforcement rods 170 have an axial length L that is greater than the height (from top 150 to bottom 152) of a groove plate 132, such that a reinforcement rod 170 can extend through the aligned passages 166 of multiple groove plates 132 in a stack (e.g., two, three, four, five, six, seven, eight or more aligned groove plates 132 in a stack, depending on the axial length of the reinforcement rods, which can be adjusted by swapping out a rod of one length for a rod of another length or by providing reinforcement rods that can be cut to length or adjusted in length (e.g., with a telescoping feature). In some examples, the rods 170 and/or the passages 166 are threaded such that rods 170 threadably engage the passages 166. An enlarged head 172 of a rod 170 acts as an axial stop at a top of a top-most groove plate 132 being coupled by the reinforcement rods 170. A nut 174 can be threadably engaged to the rod 170 towards a bottom end of the rod to secure together the groove plates 132 coupled by the rod 170. The nut 174 can be secured to a portion of the rod 170 that extends beyond the groove plate mounted to the fiber routing portion 112. In some examples, additional groove plates can be added to the stacks beyond those reinforced with rods 170, as depicted in FIG. 14.

The rods 170 are removably inserted in the stacked and aligned passages 166 of a stack 130 of groove plates 132. Thus, to modify the size of a stack 130 by adding or removing groove plates 132, the rods 170 can be removed and then the size of the stack adjusted and, if needed, the rods (or rods of a different length) reinserted once the stack has been adjusted as desired. The rods 170 provide additional stability or reinforcement for stacks 130 of groove plates 132 that are relatively large, e.g., at least there or more, at least four or more, or at least five or more, groove plates high. In certain configurations of the organizer 102, e.g., if fewer than three or fewer than four or fewer than five groove plates 132 are stacked in a stack 130, the rods 170 are not needed and not used because other stacking and stability features of the organizer 102, particularly the support imparted by the couplers 180, provide adequate stability to the stack 130.

In the example embodiment shown, relative to the sides 151, 153 of a groove plate 132, one of the passages 166 is positioned between a post 156 and a tab slot 164 on the top 152 of the groove plate 132, and between a tab 162 and a post receiving hole 158 on the bottom 154 of the groove plate, while the other of the passages 166 is positioned between a tab 162 and a post receiving hole on the top 152 of the groove plate, and between a tab slot 164 and a post receiving hole 158 on the bottom 154 of the groove plate. Alternative arrangements and relative positionings of the passages 166, the tabs 162, the tab slots 164, the posts 156 and the post receiving holes 158 are possible.

For organizers of all numbers of groove plates per stack, organizer 102 is provided with a plurality of removable couplers 180 that couple the stacks 130a and 130b of groove plates 132 together and provide stability thereto. In this example, the couplers 180 are brackets. The configuration of the brackets 180 depicted in the figures is non-limiting. In general, each bracket 180 or other coupler includes features that are securable to complementary structures of the stacks 130a and 130b. When coupled to the stacks 130a and 130b, the couplers 180 span the width w of the storage and organizing volume 134.

In some examples, each coupler 180 is attached to just one of the groove plates 132 in each stack 130. In other examples, each coupler 180 is attached to two or more adjacent groove plates 132 in each stack 130. In the example embodiment of an organizer 102 depicted, all but the top most coupler 180a and the bottom most coupler 180b of the couplers 180 are attached to two adjacent grooves plates 132 in each stack 130, the couplers 180 spanning (in a direction parallel to the axis A) portions of two groove plates in each of the stacks 130.

In the example shown, all of the couplers 180, 180a, 180b are of identical construction and interchangeable, as well as being 180° rotationally symmetrical about an axis D of the coupler 180.

In the example shown, the couplers 180 are arranged on both sides 126 and 128 of the organizer 102 in mirror image arrangements. It should be appreciated that the exact positioning of the brackets 180 relative to the stacks 130 can be adjusted. For example, fewer or more of the brackets 180 can be used to stabilize the stacks 130 than are depicted in the drawings. The arrangement of brackets 180 on one side 126, 128 of the organizer 102 need not be a mirror image of the arrangement on the other side 128, 126. The brackets 180 can be, but need not be, evenly spaced parallel to the axis A. Some of the brackets 180 can attach to just one groove plate 132 in a stack 130 while other brackets 180 attach to a pair of adjacent groove plates 132 in a stack 130. Additional variations in the arrangement of brackets 180 relative to the stacks 130 are also possible.

In some examples, at least one bracket 180 is attached to each and every groove plate 132. In some examples, at least one bracket 180 is attached to each side 151 and 153 of each and every groove plate 132. In some examples, more than one bracket 180 (e.g., two brackets) are attached to each side 151, 153 of each and every groove plate 132.

It should be appreciated that as the groove plates 132 are added to the stacks, additional brackets 180 can be provided and attached to the stacks for stability, while as groove plates 132 are removed from the stacks, brackets 180 can be removed from the assembly 102 accordingly. The brackets 180 are designed to be removable from and re-attachable to the stacks 130.

The example groove plates 132 include bracket retention bars 182 on opposing sides of the groove plate, the retention bars defining retention slots 184. The brackets include tabs 188 that cooperate with spring members 186 to grip the retention bars 182, the tabs 188 being inserted into the retentions slots 184. In each stack 130, the tabs 188 can be inserted into a retention slot 184 of one groove plate 132 or retention slots of adjacent groove plates. To allow the tabs 188 to be inserted into retention slots 184 of two adjacent groove plates, a notch 192 is defined between pairs of tabs 188, the notch 192 enabling the tabs 188 to span two adjacent groove plates in a stack 130.

Each tab-spring member mechanism includes a release lever 190 operatively coupled to the corresponding spring member 186. The levers 190 can be pressed to cause reciprocal, teeter-totter movement of the corresponding spring member 186 away from the tabs 188 of the corresponding tab-spring member mechanism to release the bracket 180 from the groove plate(s) 132 and thereby allow the bracket 180 to be removed from the organizer 102. It should be appreciated that both levers 190 of a given bracket 180 can be operated simultaneously by moving the levers 190 towards each other in a direction perpendicular to the axis A to thereby release the bracket from both stacks 130 to which it is coupled.

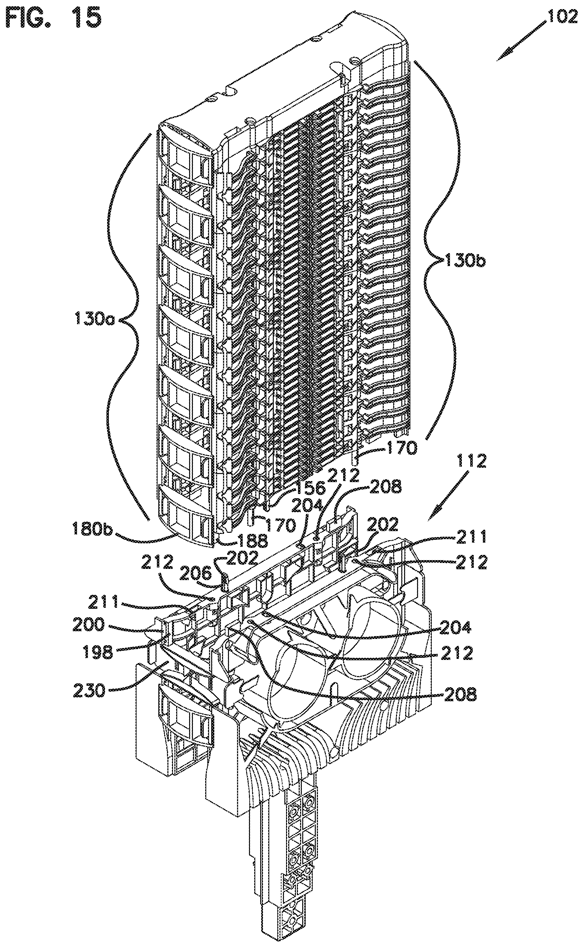

In the example organizer 102, the pair of bottom-most brackets 180b couple the bottom most groove plates 132 of the stacks 130a, 130b to each other, and also couple the bottom most groove plates 132 to the base portion 112 of the organizer 102. As shown in FIG. 15, the routing portion 112 includes retention bars 198 defining retention slots 200 for cooperating with tabs 188 and spring members 186 of the bottom-most brackets 180b in each stack 130a, 130b. The routing portion 112 also includes additional features that are complementary to the groove plates 132 and help couple and stabilize the bottom-most groove plates 132b (and thereby the stacks 130a, 130b of groove plates 132) with respect to the routing portion 112 of the organizer 102. For example, optionally the routing portion 112 includes posts 202 with spring-loaded latches 206, post receiving holes 204, tabs 208, tab slots 211, and rod receiving holes 212 that are complementary and positioned to be aligned with the corresponding complementary features of the bottom-most groove plates 132 in each stack in the same manner as described above with respect to the coupling of adjacent groove plates in a stack.

Optionally, the organizer 102 also includes an end cap 220 (FIG. 14). The end cap 220 is removably and re-attachably coupled to the top-most groove plate 132 in each stack 130a and 130b. The end cap 220 can include coupling features that are complementary to and couple to the coupling features of the groove plates such that the end cap 220 and the top-most groove plates 132 couple in at least substantially the same manner as adjacent groove plates 132 in a stack 130. The end cap 220 includes rod receiving through holes 222 that align with the rod receiving passages 166 of the stacks 130 such that reinforcement rods 170 can be inserted into the stacks 130 via the through holes 222 in the end cap 220.

Various modifications and alterations of this disclosure will become apparent to those skilled in the art without departing from the scope of the invention as defined by the claims.

## Claims

1. An optical fiber organizer assembly (102) configured to be mounted to a base (106) of an optical fiber closure (100), the assembly comprising:
a plurality of groove plates (132), each of the groove plates having a plurality of grooves (138) adapted to pivotally mount optical fiber management trays (140), the plurality of groove plates being stackable in first and second stacks (130a, 130b) of the groove plates in which:
i) there is a spacing between the first and second stacks;
ii) each of the first and second stacks includes at least two of the groove plates; and
iii) the grooves of the groove plates of the first and second stacks face away from each other; and
a plurality of brackets (180) at each of two sides (126, 128) of the organizer assembly, each of the plurality of brackets being configured to couple the first stack to the second stack while spanning the spacing between the first and second stacks.

2. The optical fiber organizer assembly of claim 1, wherein the groove plates include retention bars (182), and wherein the plurality of brackets is adapted to connect to the retention bars of groove plates of the first and second stacks at the same time.

3. The optical fiber organizer assembly of any of claims 1-2, wherein the plurality of brackets is adapted to connect to two adjacent groove plates in each of the first and second stacks at the same time.

4. The optical fiber organizer assembly of any of claims 1-3, wherein each of the groove plates comprises at least one rod receiving passage (166), wherein the plurality of groove plates is stackable in the first and second stacks such that the rod receiving passages of the groove plates of each of the first and second stacks are aligned and adapted to receive reinforcement rods (170).

5. The optical fiber organizer assembly of any of claims 1-4, wherein the groove plates include complementary stacking features.

6. The optical fiber organizer assembly of claim 5, wherein the complementary stacking features include one or more tabs (162) and one or more complementary slots (164) that receive the one or more tabs.

7. The optical fiber organizer assembly of any of claims 1-6, wherein each of the first and second stacks defines a stacking axis, and wherein each of the groove plates is symmetrical about an axis (B) that is perpendicular to its respective stacking axis.

8. The optical fiber organizer assembly of any of claims 1-7, wherein each of the plurality of brackets includes tabs (188) that cooperate with a pair of spring members (186) to grip one or more of the groove plates, the spring members being operatively coupled to release levers (190) for releasing the bracket from the one or more groove plates.

9. The optical fiber organizer assembly of any of claims 1-8, wherein each of the groove plates comprises a pair of rod receiving passages (166), wherein the plurality of groove plates are stackable in the first and second stacks such that the pairs of rod receiving passages of the groove plates of each of the first and second stacks are aligned and adapted to receive pairs of reinforcement rods (170).

10. The optical fiber organizer assembly of any preceding claim, wherein the fiber organizer assembly further comprises:
first and second fiber routing members (114, 116) to which the groove plates are mountable such that the first stack includes the first fiber routing member and the second stack includes the second fiber routing member when a groove plate of the first stack is mounted to the first fiber routing member and a groove plate of the second stack is mounted to the second fiber routing member; and
at least one fiber crossover member (230) adapted to couple the first fiber routing member to the second fiber routing member while spanning the spacing.

11. The optical fiber organizer assembly of claim 10, wherein the at least one fiber crossover member includes a pair of opposing walls (232, 234) defining a fiber guide channel (236) and at least one retention tab (238) at least partially covering the guide channel.

12. The optical fiber organizer assembly of claim 11, wherein the opposing walls have convex curvatures.

13. The optical fiber organizer assembly of any of claims 11-12, wherein each of the at least one fiber crossover member includes a plurality of entryways (242a, 242b, 242c, 242d) into the fiber guide channel.

14. The optical fiber organizer assembly of claim 1, wherein each of the plurality of brackets is a fiber crossover member (230).

15. The optical fiber organizer assembly of claim 14, wherein the fiber crossover member includes a pair of opposing walls (232, 234) defining a fiber guide channel (236) and at least one retention tab (238) at least partially covering the guide channel, and wherein the opposing walls have convex curvatures.

## Patentansprüche

1. Lichtleiterfaser-Organisatoranordnung (102), die konfiguriert ist, an einer Basis (106) eines Lichtleitfaserverschlusses (100) montiert zu werden, die Anordnung umfassend:
eine Vielzahl von Nutplatten (132), wobei jede der Nutplatten eine Vielzahl von Nuten (138) aufweist, die angepasst sind, um Lichtleiterfaser-Verwaltungskassetten (140) schwenkbar zu lagern, wobei die Vielzahl von Nutplatten in ersten und zweiten Stapeln (130a, 130b) der Nutplatten stapelbar sind, in denen:
i) es einen Abstand zwischen dem ersten und dem zweiten Stapel gibt;
ii) jeder des ersten und zweiten Stapels mindestens zwei der Nutplatten beinhaltet; und
iii) die Nuten der Nutplatten des ersten und zweiten Stapels voneinander weg weisen; und
eine Vielzahl von Halterungen (180) an jeder von zwei Seiten (126, 128) der Organisatoranordnung, wobei jede der Vielzahl von Halterungen konfiguriert ist, den ersten Stapel mit dem zweiten Stapel zu koppeln, während der Abstand zwischen dem ersten und dem zweiten Stapel überbrückt wird.

2. Lichtleiterfaser-Organisatoranordnung nach Anspruch 1, wobei die Nutplatten Haltestäbe (182) aufweisen und wobei die Vielzahl von Halterungen angepasst ist, gleichzeitig mit den Haltestäben der Nutplatten des ersten und zweiten Stapels verbunden zu werden.

3. Lichtleiterfaser-Organisatoranordnung nach einem der Ansprüche 1 bis 2, wobei die Vielzahl von Halterungen angepasst ist, mit zwei benachbarten Nutplatten in jedem des ersten und zweiten Stapels gleichzeitig verbunden zu werden.

4. Lichtleiterfaser-Organisatoranordnung nach einem der Ansprüche 1 bis 3, wobei jede der Nutplatten mindestens einen Stabaufnahmedurchgang (166) aufweist, wobei die Vielzahl von Nutplatten in dem ersten und zweiten Stapel stapelbar ist, sodass die Stabaufnahmedurchgänge der Nutplatten jedes des ersten und zweiten Stapels ausgerichtet und angepasst sind, Verstärkungsstäbe (170) aufzunehmen.

5. Lichtleiterfaser-Organisatoranordnung nach einem der Ansprüche 1 bis 4, wobei die Nutplatten komplementäre Stapelmerkmale aufweisen.

6. Lichtleiterfaser-Organisatoranordnung nach Anspruch 5, wobei die komplementären Stapelmerkmale eine oder mehrere Laschen (162) und einen oder mehrere komplementäre Schlitze (164) umfassen, die die eine oder mehreren Laschen aufnehmen.

7. Lichtleiterfaser-Organisatoranordnung nach einem der Ansprüche 1 bis 6, wobei jeder des ersten und zweiten Stapels eine Stapelachse definiert, und wobei jede der Nutplatten um eine Achse (B) symmetrisch ist, die senkrecht zu ihrer jeweiligen Stapelachse ist.

8. Lichtleiterfaser-Organisatoranordnung nach einem der Ansprüche 1 bis 7, wobei jede der Vielzahl von Halterungen Laschen (188) aufweist, die mit einem Paar von Federelementen (186) zusammenwirken, um eine oder mehrere der Nutplatten zu greifen, wobei die Federelemente betriebsmäßig mit Freigabehebeln (190) gekoppelt sind, um die Halterung von der einen oder den mehreren Nutplatten zu lösen.

9. Lichtleiterfaser-Organisatoranordnung nach einem der Ansprüche 1 bis 8, wobei jede der Nutplatten ein Paar Stabaufnahmedurchgänge (166) aufweist, wobei die Vielzahl von Nutplatten in den ersten und zweiten Stapeln stapelbar sind, sodass die Paare von Stabaufnahmedurchgängen der Nutplatten jedes des ersten und zweiten Stapels ausgerichtet und angepasst sind, um Paare von Verstärkungsstäben (170) aufzunehmen.

10. Lichtleiterfaser-Organisatoranordnung nach einem der vorhergehenden Ansprüche, die Lichtleiterfaser-Organisatoranordnung ferner umfassend:
erste und zweite Faserführungselemente (114, 116), an denen die Nutplatten montierbar sind, sodass der erste Stapel das erste Faserführungselement aufweist und der zweite Stapel das zweite Faserführungselement aufweist, wenn eine Nutplatte des ersten Stapels an dem ersten Faserführungselement montiert ist und eine Nutplatte des zweiten Stapels an dem zweiten Faserführungselement montiert ist; und
mindestens ein Faserkreuzungselement (230), das angepasst ist, das erste Faserführungselement mit dem zweiten Faserführungselement zu koppeln, während es den Abstand überspannt.

11. Lichtleiterfaser-Organisatoranordnung nach Anspruch 10, wobei das mindestens eine Faserüberkreuzungselement ein Paar gegenüberliegender Wände (232, 234), die einen Faserführungskanal (236) definieren, und mindestens eine Haltelasche (238) aufweist, die den Führungskanal zumindest teilweise bedeckt.

12. Lichtleiterfaser-Organisatoranordnung nach Anspruch 11, wobei die gegenüberliegenden Wände konvexe Krümmungen aufweisen.

13. Lichtleiterfaser-Organisatoranordnung nach einem der Ansprüche 11 bis 12, wobei jedes der mindestens einen Faserkreuzungselemente eine Vielzahl von Eintrittsöffnungen (242a, 242b, 242c, 242d) in den Faserführungskanal aufweist.

14. Lichtleiterfaser-Organisatoranordnung nach Anspruch 1, wobei jede der Vielzahl von Halterungen ein Faserkreuzungselement (230) ist.

15. Lichtleiterfaser-Organisatoranordnung nach Anspruch 14, wobei das Faserkreuzungselement ein Paar gegenüberliegender Wände (232, 234) aufweist, die einen Faserführungskanal (236) und mindestens eine Haltelasche (238) definieren, die den Führungskanal zumindest teilweise bedeckt, und wobei die gegenüberliegenden Wände konvexe Krümmungen aufweisen.

## Revendications

1. Ensemble de rangement de fibres optiques (102) configuré pour être monté sur une base (106) d'un boîtier de fibres optiques (100), l'ensemble comprenant :
une pluralité de plaques rainurées (132), chacune des plaques rainurées ayant une pluralité de rainures (138) adaptées pour monter de manière pivotante des plateaux de gestion de fibres optiques (140), la pluralité de plaques rainurées pouvant être empilées dans des première et seconde piles (130a, 130b) de plaques rainurées dans lesquelles :
i) il existe un espacement entre les première et seconde piles ;
ii) chacune des première et seconde piles comprend au moins deux des plaques rainurées ; et
iii) les rainures des plaques rainurées des première et seconde piles sont tournées à l'opposé l'une de l'autre ; et
une pluralité de supports (180) au niveau de chacun des deux côtés (126, 128) de l'ensemble d'organisation, chacun des supports étant configuré pour coupler la première pile à la deuxième pile tout en couvrant l'espacement entre les première et deuxième piles.

2. Ensemble de rangement de fibres optiques selon la revendication 1, dans lequel les plaques rainurées comprennent des barres de retenue (182), et dans lequel la pluralité de supports est adaptée pour se connecter aux barres de retenue des plaques rainurées des première et seconde piles en même temps.

3. Ensemble de rangement de fibres optiques selon l'une quelconque des revendications 1 et 2, dans lequel la pluralité de supports est adaptée pour se connecter à deux plaques rainurées adjacentes dans chacune des première et seconde piles en même temps.

4. Ensemble de rangement de fibres optiques selon l'une quelconque des revendications 1 à 3, dans lequel chacune des plaques rainurées comprend au moins un passage de réception de tige (166), dans lequel la pluralité de plaques rainurées peut être empilée dans les première et seconde piles de sorte que les passages de réception de tige des plaques rainurées de chacune des première et seconde piles sont alignés et adaptés pour recevoir des tiges de renforcement (170).

5. Ensemble de rangement de fibres optiques selon l'une quelconque des revendications 1 à 4, dans lequel les plaques rainurées comprennent des éléments d'empilement complémentaires.

6. Ensemble de rangement de fibres optiques selon la revendication 5, dans lequel les caractéristiques d'empilement complémentaires comprennent une ou plusieurs pattes (162) et une ou plusieurs fentes complémentaires (164) qui reçoivent la ou les pattes.

7. Ensemble de rangement de fibres optiques selon l'une quelconque des revendications 1 à 6, dans lequel chacune des première et seconde piles définit un axe d'empilement, et dans lequel chacune des plaques rainurées est symétrique autour d'un axe (B) qui est perpendiculaire à son axe d'empilement respectif.

8. Ensemble de rangement de fibres optiques selon l'une quelconque des revendications 1 à 7, dans lequel chacun des supports comprend des pattes (188) qui coopèrent avec une paire d'éléments de ressort (186) pour saisir une ou plusieurs des plaques rainurées, les éléments de ressort étant couplés de manière opérationnelle à des leviers de libération (190) pour libérer le support de la ou des plaques rainurées.

9. Ensemble de rangement de fibres optiques selon l'une quelconque des revendications 1 à 8, dans lequel chacune des plaques rainurées comprend une paire de passages de réception de tiges (166), dans lequel la pluralité de plaques rainurées peut être empilée dans les première et seconde piles de telle sorte que les paires de passages de réception de tiges des plaques rainurées de chacune des première et seconde piles sont alignées et adaptées pour recevoir des paires de tiges de renforcement (170).

10. Ensemble de rangement de fibres optiques selon l'une quelconque des revendications précédentes, dans lequel l'ensemble de rangement de fibres comprend en outre :
des premier et second éléments d'acheminement de fibres (114, 116) sur lesquels les plaques rainurées peuvent être montées de sorte que la première pile comprend le premier élément d'acheminement de fibres et la seconde pile comprend le second élément d'acheminement de fibres lorsqu'une plaque rainurée de la première pile est montée sur le premier élément d'acheminement de fibres et qu'une plaque rainurée de la seconde pile est montée sur le second élément d'acheminement de fibres ; et
au moins un élément de croisement de fibres (230) adapté pour coupler le premier élément d'acheminement de fibres au deuxième élément d'acheminement de fibres tout en couvrant l'espacement.

11. Ensemble de rangement de fibres optiques selon la revendication 10, dans lequel au moins un élément de croisement de fibres comprend une paire de parois opposées (232, 234) définissant un canal de guidage de fibres (236) et au moins une patte de retenue (238) recouvrant au moins partiellement le canal de guidage.

12. Ensemble de rangement de fibres optiques selon la revendication 11, dans lequel les parois opposées ont des courbures convexes.

13. Ensemble de rangement de fibres optiques selon l'une quelconque des revendications 11 à 12, dans lequel chacun des au moins un élément de croisement de fibres comprend une pluralité de voies d'entrée (242a, 242b, 242c, 242d) dans le canal de guidage de fibres.

14. Ensemble de rangement de fibres optiques selon la revendication 1, dans lequel chacun des supports de la pluralité de supports est un élément de croisement de fibres (230).

15. Ensemble de rangement de fibres optiques selon la revendication 14, dans lequel l'élément de croisement de fibres comprend une paire de parois opposées (232, 234) définissant un canal de guidage de fibres (236) et au moins une patte de retenue (238) recouvrant au moins partiellement le canal de guidage, et dans lequel les parois opposées ont des courbures convexes.
